# EUROPÄISCHE PATENTANMELDUNG

(11) **EP 1 249 480 A1**
(43) Veröffentlichungstag der Anmeldung: **16.10.2002**
(21) Anmeldenummer: 02004791.6
(22) Anmeldetag: 02.03.2002
(51) Int. Cl.: C09J 175/04

(54) **Klebfolienstreifen**

(30) Priorität: 20.03.2001 DE 10113422
(71) Anmelder: Tesa AG, 20253 Hamburg (DE)
(72) Erfinder: Zimmermann, Dieter, 21635 Jork (DE); Quandt, Jürgen-Christian, 25336 Klein Nordende (DE); Kartheus, Holger, 20255 Hmaburg (DE)

(57) **Zusammenfassung**

Klebfolienstreifen für eine wieder lösbare Verklebung, der sich durch Ziehen in Richtung der Verklebungsebene aus einer Klebfuge herauslösen läßt, mit einem nichtklebenden Anfasser und einem sich daran anschließenden ein- oder beidseitig klebenden Streifen, gekennzeichnet durch
c) einen Träger aus einer Folie, die eine Reißkraft von 2-20 N/cm und eine Reißdehnung von 200 - 800% aufweist, und
d) eine zumindest einseitig darauf beschichtete Klebmasse auf Polyurethan-Basis, enthaltend
   50 - 90 Gew% eines aliphatischen Isocyanat-Polyol-Vernetzungssystem,
   15-35 Gew% eines Füllstoffs, und
   0,05 - 0,5 Gew% eines Activators.

## Beschreibung

Die Erfindung betrifft einen Klebfolienstreifen für eine wiederablösbare Verklebung, der sich durch Ziehen in Richtung der Verklebungsebene aus einer Klebfuge herauslösen läßt.

Elastisch oder plastisch hochdehnbare Selbstklebebänder, welche sich durch Verstrecken im wesentlichen in der Verklebungsebene (durch sogenanntes Strippen) auch von z.T. sehr empfindlichen Verklebungsuntergründen, wie z.B. Papieren oder gestrichener Rauhfasertapete, rückstands- und zerstörungsfrei wiederablösen lassen, sind in US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729 und DE 197 08 366 beschrieben. Eingesetzt werden sie häufig in Form von Klebebandstreifen, welche einen bevorzugt nicht haftklebrigen Anfasserbereich aufweisen, von welchem aus der Ablöseprozeß eingeleitet wird. Besondere Applikationen und Ausführungsformen entsprechender Selbstklebebänder finden sich u.a. in DE 42 33 872, WO 94/21157, DE 44 28 587, DE 44 31 914, WO 97/07172, DE 196 49 636 und WO 98/03601.

Der Einsatz von PU-Klebmassen für solche Produkte ist jedoch bisher nicht überzeugend gelungen. Denn Klebmassen, wie sie z.B. in DE 196 18 825 A1 beschreiben sind, durchfetten bei derartiger Anwendung z.B. Posterpapier und sind somit für consumer-Anwendungen nicht geeignet. Auch die verbesserte hydrophile Polyurethan-Gelmasse nach WO 97/43328 ist für derartige Anwendungen nicht geeignet. Bei Papierverklebungen und 40 bzw. 70°C-Lagerungen kommt es zwar nur zu einem Anfetten des Papiers, aber nach Solila-Bestrahlung (Lampe: OSRAM, ULTRA VITALUX 300W/220-230V, E27) verfärbt sich die Masse leicht gelblich, und durchfettet dann das Papier.

Somit war es Aufgabe der Erfindung, hier Abhilfe zu schaffen, also ein PU-Produkt zur Verfügung zu stellen, das auch nach Wärme- und Sonneneinwirkung für consumer-Anwendungen geeignet ist.

Gelöst wird diese Aufgabe durch Klebfolienstreifen, wie sie näher in den Ansprüchen gekennzeichnet sind.

Um Wiederholungen zu vermeiden, wird auf die Ansprüche ausdrücklich Bezug genommen.

Erfindungsgemäß handelt es sich insbesondere um ein 3-Schichten-Fix, dessen beide äußere Schichten aus den erfindungsgemäßen PU-Massen bestehen. Die Mittelschicht besteht aus einer Folie von 40 - 80µm Stärke, bestehend aus PE oder PP oder PU usw. die eine Reißkraft von 2-20 N/cm und eine Reißdehnung von 200-800 % aufweist.

In der erfindungsgemäß eingesetzten PU-Klebmasse eignen sich folgenden Komponenten.

Als Polyol eignet sich prinzipiell jede Verbindung mit freien OH-Gruppen, die sich mit einem Isocyanat zu einem Polyurethan umsetzen lassen. Insbesondere geeignet sind ein industriell hergestelltes Polyetherpolyol (Levagel E) und das Naturprodukt Ricinusöl sowie Mischungen beider Polyole.

Levagel E: (Hersteller Bayer AG Leverkusen, siehe Bayer-Sicherheitsdatenblatt 823086). Das Levagel E wird beim Hersteller mit 0,1% D,L-Tocopherol als Antioxidans) stabilisiert. Zu den Zwecken der Erfindung wird vorzugsweise die Stabilisatormenge auf größer 0,5% (+0,4% zur Stabilisierung des Herstellers von 0,1%), insbesondere auf 0,5 - 0,8 % erhöht. Dies garantiert ein stabiles Endprodukt für 3-5 Jahre. D,L-Tocopherol ist von CIBA Irganox E 201, von Hoffmann-La Roche ist Ronotec 201.
Ricinusöl: (Hersteller/Lieferant: Jan Dekker und Henry Lamotte siehe Sicherheits-Datenblätter der Firmen). Dieses Produkt hat einen Mindest-OH-Zahl von 160. Dieses Produkt ist mit einem Gemisch aus natürlichen Tocopherolen teilstabilisiert. Eine erforderliche zusätzliche Stabilisierung erfolgt mit D,L-Tocopherol.
Das bevorzugt benutzte Isocyanat ist das von der Firma Bayer / Leverkusen hergestellte Desmodur KA 8712 (Bayer-Sicherheitsdatenblatt 822551). Es handelt sich chemisch um ein modifiziertes Hexamethylendi-isocyanat (HDI).

Geeignete Füllstoffe sind (Gew.%):
- a: Füllstoff: Superabsorber Favor T (ein Polyacrylat)
Hersteller: Stockhausen /Krefeld
Einsatzmenge: 5 - 15 %, bevorzugt 5 bis 10 %.
Einsatzzweck: Kleben auf leicht feuchtem Untergrund bzw. verkleben in Räumen
mit hoher Luftfeuchtigkeit.
- b: Füllstoff: Zinkoxid
Hersteller: Grillo
Einsatzmenge: 5 - 10%.
Einsatzzweck: Ein Füllstoff, der ideale Eigenschaften für Poster- und Power-Strips mitbringt. Er bringt eine hervorragende Optik, verbessert die klebtechnischen Eigenschaften der Masse und vermeidet das durchfetten von Papieruntergründen.
- c: Füllstoff: Calciumcarbonat und Magnesiumcarbonat
Hersteller: Chemikalienanbieter z.B. Merck/Darmstadt
Einsatzmenge: 5 - 10%
Einsatzzweck: Sind spezielle Füllstoffe, die die Optik des Produktes verbessern.
Die Raumstabilität (Form) des Produktes sichern, vermeiden das durchfetten von Papieruntergründen und absorbieren evtl. Abbauprodukte des Polyurethans.

### Träger-Folie:

Als Mittel-Folie wurden insbesondere Platilon UO73 (Firma: Wolff/Walsrode) und Strerop NC_{B} (Firma f. P./Kufstein) eingesetzt.

Die Prüfnormen für Klebkraft und Reißdehnung sind in den Prüfnormen
DIN ISO EN 527-3 niedergelegt.

### Rezepturen

Die Klebkräfte der Massen werden überwiegend durch das eingesetzte Polyol und die Kennzahl (KZ) ident. Vemetzungsgrad (VG) bestimmt. Der VG gibt die praktisch mit dem Isocyanat umgesetzten OH-Gruppen in % an.
Zu unseren Rezepturbeispielen: 45% der im Polyol vorhandenen OH-Gruppen sind mit dem Isocyanat zu einem Polyurethan umgesetzt worden.

Der Vernetzungsgrad ist zum Vergleich auf 45,0 eingestellt. Alle %-Angaben sind Gewichts-%.

| R1 | Levagel E | 77,44% | R2 | Ricinusöl | 60,66% |
|---|---|---|---|---|---|
| | Stabilisator E | 0,29% | | Stabilisator E | 0,22% |
| | Zinkoxid | 10,00% | | Zinkoxid | 10,00% |
| | Favor T | 5,00% | | Favor T | 5,00% |
| | Reaktor B | 7,17% | | Reaktor B | 24,02% |
| | Aktivator | 0,10% | | Activtor | 0,10% |

| R3 | Levagel E | 80,17% | R4 | Ricinusöl | 62,76% |
|---|---|---|---|---|---|
| | Stabilisator E | 0,30% | | Stabilisator E | 0,23% |
| | MgCO3 | 10,00% | | MgCO3 | 10,00% |
| | Favor T | 5,00% | | Favor T | 5,00% |
| | Reaktor B | 7,43% | | Reaktor B | 24,91% |
| | Aktivator | 0,10% | | Aktivator | 0,10% |

### Masseherstellung

Die Herstellung dieser Massetypen geschieht vorzugsweise in einem evakuierbaren Mischer. Vorgelegt wird z.B. das Levagel E. Danach werden nacheinander die restlichen Rezepturenkomponenten unter Rühren hinzugefügt und die Dispersion anschließend nochmals intensiv durchmischt. Danach wird die Masse durch Evakuieren blasenfrei gemacht.
Bedingt durch die stark unterschiedlichen Anforderungen kommen unterschiedliche Rezepturen zum Einsatz.

### Herstellung der Ballenware

- Die drei Komponenten: **Komponente A** (Dispersion)
**Komponente B** (Isocyanat)
**Komponente C** (Aktivator)
Die Komponente C wird aus produktionstechnischen Gründen in verdünnter Lösung (2-10% Aktivator) gefahren
werden in einem schnell rotierenden Mischkopf zusammengemischt und über ein Doppelrakelsystem (Messer- und Rollrakel) auf einem doppelseitig silikonisiertem 90g-Papier ausgestrichen. Abgedeckt wird mit der Mittelfolie.

Durch Einbringen einer bestimmten Menge Stickstoff in den Mischkopf - als Komponente D - kann ein genau definierter Schaum hergestellt werden.

Die PU-Masse reagiert bei 70°C in einem Wärmekanal und wird anschließend aufgewickelt.
Speziell die Zinkoxid-Massen benötigen insb. eine Reifezeit, etwa von 30-120 min zum kompletten ausreagieren.

Beim Einsatz der PU-Folie ist die Reifezeit tunlichst zu beachten. Nach Ablauf der Reifezeit ist es möglich, die PE-Stützfolie von der PU-Folie abzuziehen und die 2. Schicht aufzubringen. Dazu wird die PE-Stützfolie vor dem Rakelsystem abgezogen und die 2. Masseschicht direkt auf die PU-Folie gestrichen. Der 2. Massestrich wird z.B. mit einer einseitig silikonisierten PETP-Folie (36µm) abgedeckt. Die 2. Schicht wird wie die Schicht 1 im Wärmekanal bei 70°C ausgehärtet und anschließend der Verbund aufgewickelt. Nach der Reifezeit ist die Ballenware fertig zum Schneiden und konfektionieren - zu Poster- und Power-Strips, wie bisher bekannt.

Gegebenenfalls erfolgt ein beidseitiges ESH-Bestrahlen des Tri-Laminates (PU-Masse/Folie/PU-Masse), z.B. mit einer Polymerphysics-Anlage: 230 KV u. 60 K Gr.

Danach wird das Material zu 7 cm breiten Mutterrollen aufgeschnitten. Durch rotatives Stanzen entstehen dann daraus durch Vereinzelung die bekannten tesa-Posterstrip-Formate.
Dann können die jetzt freiliegenden Stanzschnittkanten bestrahlt werden (ESH oder UV) und es entstehen dann z.B. auf Glasverklebungen keine Schnittkantenkonturen mehr.

Die entstandenen Muster (Stanzlinge) wurden insbesondere mit der Solila (OSRAM, ULTRA-VITALUX, 300 W, 220-230 V, E 27) bestrahlt (bei 40°C):

| | |
|---|---|
| nach 24 h | noch klebrig |
| nach 2 d | leicht tackig |
| nach 3 d | fast klebfrei |
| nach 4 d | KLEBFREI! |
| | keine Verfärbung, keine Rückstände nach Verklebung. |

Aufgrund der Geschmeidigkeit des Produktes ist auch auf rauhen Oberflächen (z.B. gestrichene Rauhfaser) fast immer eine 100%ige Verklebungsfläche gegeben und somit ist das Produkt für Posterbefestigung gut geeignet.

Mit einem Absorberanteil für Wasser (Favor T) haftet das Material auch gut auf sehr feuchten Untergründen.

## Patentansprüche

1. Klebfolienstreifen für eine wieder lösbare Verklebung, der sich durch Ziehen in Richtung der Verklebungsebene aus einer Klebfuge herauslösen läßt, mit einem nichtklebenden Anfasser und einem sich daran anschließenden ein- oder beidseitig klebenden Streifen, **gekennzeichnet durch**
a) einen Träger aus einer Folie, die eine Reißkraft von 2-20 N/cm und eine Reißdehnung von 200 - 800% aufweist, und
b) eine zumindest einseitig darauf beschichtete Klebmasse auf Polyurethan-Basis, enthaltend
50 - 90 Gew% eines aliphatischen Isocyanat-Polyol-Vernetzungssystem,
15 - 35 Gew% eines Füllstoffs, und
0,05 - 0,5 Gew% eines Activators.

2. Klebfolienstreifen nach Anspruch 1, **dadurch gekennzeichnet, daß** der Träger aus einer 40 - 80 µm dicken Folie besteht, insbesondere aus PE, PP oder PU.

3. Klebfolienstreifen nach Anspruch 1, **dadurch gekennzeichnet, daß** die Klebmasse thermisch und gegebenenfalls zusätzlich ESH-vernetzt ist, gegebenenfalls zusätzlich auch an den Schnittkanten UV- oder ESH-vernetzt ist.

4. Klebfolienstreifen nach Anspruch 1, **dadurch gekennzeichnet, daß** das aliphatische lsocyanat-Polyol-Vemetzungssystem ein Polyetherpolyol und/oder Ricinusöl enthält, gegebenenfalls stabilisiert mit Tocopherolen, sowie als Isocyanat ein gegebenenfalls modifiziertes Hexamethylendi-isocyanat.

5. Klebfolienstreifen nach Anspruch 1, **dadurch gekennzeichnet, daß** als Füllstoff ein Absorber, Zinkoxyd, Calciumcarbonat und/oder Magnesiumcarbonat eingesetzt wird.

6. Klebfolienstreifen nach Anspruch 1, **dadurch gekennzeichnet, daß** die Klebmasse beidseitig auf dem Träger beschichtet ist.

7. Klebfolienstreifen nach Anspruch 1, **dadurch gekennzeichnet, daß** die Klebmasse 500 - 800 µm dick ist.

8. Klebfolienstreifen nach Anspruch 1, **dadurch gekennzeichnet, daß** der gesamte Klebfolienstreifen 400 - 4000 µm, insbesondere 1000 - 2000µm dick ist.

9. Klebfolienstreifen nach Anspruch 1, **dadurch gekennzeichnet, daß** die Klebmassegeschäumt oder ungeschäumt ist.

10. Verwendung eines Klebfolienstreifens nach einem der Ansprüche 1 - 9 zum Verkleben und späteren beschädigungslosen, rückstandsfreien Lösen der Klebbindung durch Ziehen an dem Klebfolienstreifen in Richtung der Verklebungsebene.
